# EUROPEAN PATENT APPLICATION

(11) **EP 4 843 641 A1**
(43) Date of publication of application: **25.11.2026**
(21) Application number: 25802623.6
(22) Date of filing: 28.03.2025
(51) Int. Cl.: A63F 13/5378, A63F 13/5372, A63F 13/537

(54) **VIRTUAL MAP MARKING METHOD AND APPARATUS, DEVICE, STORAGE MEDIUM, AND PROGRAM PRODUCT**

(30) Priority: 16.05.2024 CN 202410631750
(71) Applicant: Tencent Technology (Shenzhen) Company Limited, Shenzhen, Guangdong 518057 (CN)
(72) Inventor: XIE, Jieqi, Shenzhen, Guangdong 518057 (CN)
(74) Representative: EP&C
(86) International application number: PCT/CN2025/085581
(87) International publication number: WO 2025/236874

(57) **Abstract**

The present application relates to the field of human-computer interaction, and discloses a virtual map marking method and apparatus, a device, a storage medium, and a program product. The method comprises: displaying a virtual map; in response to receiving a first range marking operation executed for the virtual map, generating a first range identifier; and displaying the first range identifier on the virtual map. A range marking function is provided for players, and thus the players can perform area marking on virtual maps, overcoming the technical defect in the related art of only supporting point marking; and range identifiers displayed on the virtual maps provide more match information for the players, thereby improving the efficiency of transferring match information between the players.

## Description

This application claims priority to Chinese Patent Application No. 202410631750.2, filed with the China National Intellectual Property Administration on May 16, 2024, and entitled "METHOD AND APPARATUS FOR MARKING VIRTUAL MAP, DEVICE, STORAGE MEDIUM, AND PROGRAM PRODUCT".

### FIELD OF THE TECHNOLOGY

The present disclosure relates to the field of human-computer interaction, and more specifically, to a method for marking a virtual map.

### BACKGROUND OF THE DISCLOSURE

In an application program supporting a virtual scenario, a player may communicate with another player in a game through marking a virtual place.

In related art, a terminal receives a marking operation performed by the player on any point of a virtual map, generates a mark at the point, and displays a connection line between a current position of the player and the point. The connection line is configured for prompting the player to head toward location represented by the marked point along a path indicated by the connection line.

The manner used in the related art suffers low efficiency of transmitting game information between players.

### SUMMARY

Embodiments of the present disclosure provide a method for marking a virtual map, an apparatus, a device, a storage medium, and a program product. Efficiency of transmitting game information between players can be improved. The technical solutions are as follows.

In an aspect, a method for marking a virtual map, executable by a terminal, is provided. The method comprises: displaying a virtual map of a virtual scenario; generating a first region identifier that marks a first region of the virtual map, in response to receiving an operation that is performed on the virtual map and indicates the first region; and displaying the generated first region identifier on the virtual map.

In another aspect, an apparatus for marking a virtual map is provided. The apparatus comprises: a displaying module, configured for displaying a virtual map of a virtual scenario; a generating module, configured for generating a first region identifier that marks a first region of the virtual map, in response to receiving an operation that is performed on the virtual map and indicates the first region; and where the displaying module is configured for displaying the generated first region identifier on the virtual map.

In another aspect, a computer device is provided. The computer device comprises a processor and a memory, wherein the memory stores at least one instruction, program, code, or code set, and the at least one instruction, program, code, or code set when loaded and executed by the processor implements the foregoing method.

In another aspect, a computer-readable storage medium is provided. The computer-readable storage medium stores at least one program, and the at least one program when loaded and executed by a processor implements the method according to any one of the foregoing method aspects.

In another aspect, a computer program product or a computer program is provided. The computer program product or the computer program comprises at least one program stored in a computer-readable storage medium. The at least one program, when read and executed by a processor, implements the method according to any one of the foregoing method aspects.

Beneficial effects of the technical solutions provided in embodiments of the present disclosure at least comprise the following.

Herein a region marking function is provided for a player. The operation indicating the first region is performed on a partial region of the virtual map to generate a first region identifier that marks the partial region. Compared with the related art in which only a single point is marked, the player may mark partial regions of the virtual map. The partial region is marked as a whole and thus more game information can be transferred through the single marking operation, which improves the efficiency of transmitting game information. For example, when the player is in a special scenario and transmits game information directly using the region identifier, the efficiency of transmitting the game information between players can be improved, and the game experience is also improved. For example, when virtual resources are not uniformed distributed in different regions in the virtual scenario, the player may mark a region rich in resources (e.g., an area including more virtual resources or virtual triggers) on the virtual map. Thus, the generated first region identifier provides more game information for the player, so that the player can intuitively learn the region rich in resources through viewing the first region identifier. Thereby, the player's sensibility to game resources is improved.

### BRIEF DESCRIPTION OF THE DRAWINGS

FIG. 1 is a schematic diagram of an interface for a method for marking a virtual map according to an embodiment of the present disclosure.
FIG. 2 is a schematic diagram of a computer system according to an embodiment of the present disclosure.
FIG. 3 is a flowchart of a method for marking a virtual map according to an embodiment of the present disclosure.
FIG. 4 is a schematic diagram of a process of enlarging a first region identifier from a minimum size to a maximum size according to an embodiment of the present disclosure.
FIG. 5 is a schematic diagram of a process of generating a first region identifier according to a sliding operation according to an embodiment of the present disclosure.
FIG. 6 is a flowchart of a method for marking a virtual map according to another embodiment of the present disclosure.
FIG. 7 is a schematic diagram of a process of establishing a coordinate system for a first region identifier at a first point according to an embodiment of the present disclosure.
FIG. 8 is a schematic diagram of a process of adjusting a first region identifier according to a tilting operation according to an embodiment of the present disclosure.
FIG. 9 is a flowchart of a method for marking a virtual map according to another embodiment of the present disclosure.
FIG. 10 is a schematic diagram of an interface for marking another region on a virtual map according to an embodiment of the present disclosure.
FIG. 11 is a flowchart of a method for marking a virtual map according to another embodiment of the present disclosure.
FIG. 12 is a flowchart of a method for marking a virtual map according to another embodiment of the present disclosure.
FIG. 13 is a flowchart of a method for marking a virtual map according to another embodiment of the present disclosure.
FIG. 14 is a structural block diagram of an apparatus for marking a virtual map according to an embodiment of the present disclosure.
FIG. 15 is a structural block diagram of a computer device according to an embodiment of the present disclosure.

### DESCRIPTION OF EMBODIMENTS

To make objectives, technical solutions, and advantages of the present disclosure more comprehensible, the following further describes implementation manners of the present disclosure in detail with reference to the accompanying drawings. Apparently, the embodiments described are a part rather than all of the embodiments of the present disclosure. All other embodiments acquired by a person of ordinary skill in the art based on the embodiments of the present disclosure without creative efforts shall fall within the protection scope of the present disclosure.

In the present disclosure, terms such as "first" and "second" are configured for distinguishing same items or similar items having basically same functions. The "first" and the "second" do not have a logical or time sequence dependency relationship, and do not limit a quantity and an execution sequence.

First, terms involved in the embodiments of the present disclosure are briefly described.

Virtual scenario: The virtual scenario is a virtual environment or a virtual world that is displayed in a target application running on a terminal, for example, a virtual gaming environment is displayed when a shooting game runs on the terminal. The virtual scenario includes at least one of: a two-dimensional virtual scenario, a 2.5-dimensional virtual scenario, a three-dimensional virtual scenario, or the like. The present disclosure is not limited to the above examples. The virtual scenario may be a purely imaginary scenario, a simulated scenario of a real world, or a semi-imaginary and semi-simulation scenario. In the embodiments of the present disclosure, the virtual scenario includes at least one virtual point, and the virtual point is represents a location in the virtual scenario.

Virtual object: The virtual object is a movable object in the virtual scenario. The movable object may be a virtual person, a virtual animal, an animation person, or the like, for example, a person, an animal, a plant, an oil barrel, a wall, or a stone displayed in the virtual scenario. Herein, when the virtual scenario is implemented as the three-dimensional virtual scenario, the virtual object may be a three-dimensional model created based on an animation skeleton technology. Each virtual object has a shape and a volume in the three-dimensional virtual environment and occupies a part of space in the three-dimensional virtual environment.

Virtual map: The virtual map comprises terrain information of a virtual scenario. In the virtual scenario, different virtual objects may be represented using symbols, colors, text, and the like, and the virtual scenario may be "shrunk" into the virtual map under a certain scale. For example, a virtual building, a virtual item, a virtual vehicle, a virtual trigger, and/or a virtual land is identified by using different symbols, colors, or text, that are displayed on the virtual map for describing the virtual scenario. Herein, the virtual map may include a global virtual map and a thumbnail virtual map. The global virtual map is configured for completely displaying terrain information of the virtual scenario in the game, and the thumbnail virtual map is configured for displaying terrain information within a preset range centered on the virtual object.

Virtual trigger: The virtual trigger is configured to interact with the virtual object in the virtual scenario. For example, the virtual scenario includes a virtual task trigger, a virtual plot trigger, a virtual shop, and the like.

In an application program supporting the virtual scenario, a player needs to perform point marking on the virtual map to implement game communication with another player. For example, player a marks point 1 on the virtual map, and a terminal generates a connection line between the player a and the point 1 based on a point marking operation of the player a, and synchronizes the connection line to a terminal of another player in the same team with the player a. Hence, game information can be transmitted in a special case such as the player muting a microphone is implemented.

In related art, a player can mark only one point by performing a single marking operation on a virtual map, and only one point identifier at the point can be displayed on the virtual map. In some special scenarios such as a rich-resource region and a point having multiple virtual triggers, more information cannot be transmitted using only one mark. Players need to mark points frequently in the rich-resource region, which has low efficiency of transmitting game information between players and also increases operation complexity in the games.

In a method for marking a virtual map provided in embodiments of the present disclosure, when performing a marking operation on a virtual map, a player can mark a partial region on the virtual map as a whole by using a single marking operation, which addresses the issues of one point at a time. An operation of marking multiple points within a region can also be implemented. The efficiency of transmitting game information between players is improved in a special case such as a player muting a microphone.

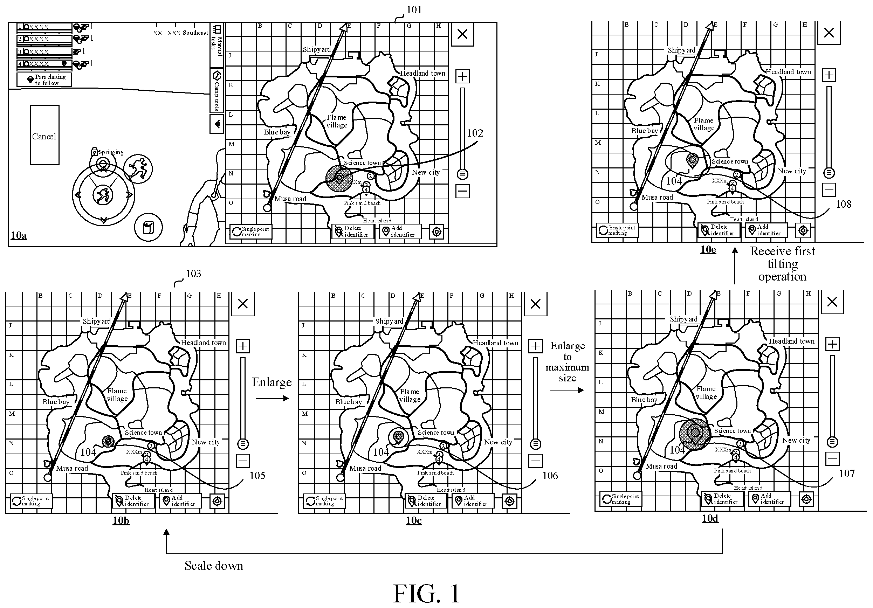

FIG. 1 is a schematic diagram of a method for marking a virtual position according to an embodiment of the present disclosure.

In embodiments of the present disclosure including the embodiments of both the claims and the specification (hereinafter referred to as "all embodiments of the present disclosure"), a target application supporting a virtual scenario may be installed and run on a terminal held by a player. The target application may be any one of: a virtual reality application program, a first-person shooting (FPS) game, a third person shooting (TPS) game, a multiplayer online game arena game (MOBA), a massive multiplayer online role-playing game (MMORPG), or the like. The present disclosure is not limited to the above examples.

The terminal displays the virtual scenario through the target application. The virtual scenario includes a virtual map and a virtual object. The target application provides a function of marking a point and a region in the virtual map.

As shown in subfigure 10a in FIG. 1, a virtual map 101 is displayed on a display interface. A first region identifier 102 is generated in response to receiving an operation indicating a first region on the virtual map 101, and the first region identifier 102 is then displayed on the virtual map 101.

Another embodiment is shown in subfigure 10b in FIG. 1. In response to receiving the operation indicating the first region performed at a first point 104 of a virtual map 103, a region marked by (e.g. covered by) the first region identifier has a minimum size (for example, the marked region 105 shown in subfigure 10b in FIG. 1) and is displayed at a position of the first point 104. During a period in which the operation that triggers the first point 104 lasts, the region of the minimum size is enlarged (the enlarged region may be, for example, the marked region 106 as shown in subfigure 10c in FIG. 1) until it reaches the maximum size (for example, the marked region 107 as shown in subfigure 10d in FIG. 1). If the operation still lasts after the region reaches the maximum size, the region marked by (e.g. covered by) the first region identifier shrinks towards the minimum size, e.g., the size of the marked region 105 as shown in subfigure 10b in FIG. 1. The region marked by (e.g. covered by) the first region identifier is subject to the above cyclical size variation until the operation that triggers the first point 104 is canceled or terminates.

In another embodiment, during the period of the operation triggering the first point 104, if a tilting operation on a terminal body (namely, a body of the terminal) is received, the size of the region marked by the first region identifier is adjusted according to a direction of the tilting. It is assumed that the size of the region marked by the first region identifier is as shown in subfigure 10d in FIG. 1. In response to a first tilting operation lifting a right side of the body of the terminal with respect to a left side of the body of the terminal, a left boundary of a contour of the marked region 107 as shown in subfigure 10d in FIG. 1 is extended outward to generate the region 108 marked by the first region identifier as shown in subfigure 10e in FIG. 1.

In the foregoing solution, a function of performing region marking on a virtual map is provided for a player. During region marking, a size of a region marked by the generated region identifier is changed on the virtual map, so that the player can more intuitively learn a process of generating the region identifier, which help draw attention of the player when marking a region and prevent the player from performing unnecessary marking operations. It also improves human-computer interaction efficiency. In addition, a manner of generating a region identifier with an irregular size according to a tilting angle of a terminal body is further provided, which provides more diversified manners for generating the region identifier.

The terminal may be a smartphone, a tablet computer, a desktop computer, a portable notebook computer, a smart appliance, a vehicle-mounted terminal, an aircraft, or the like, but is not limited thereto.

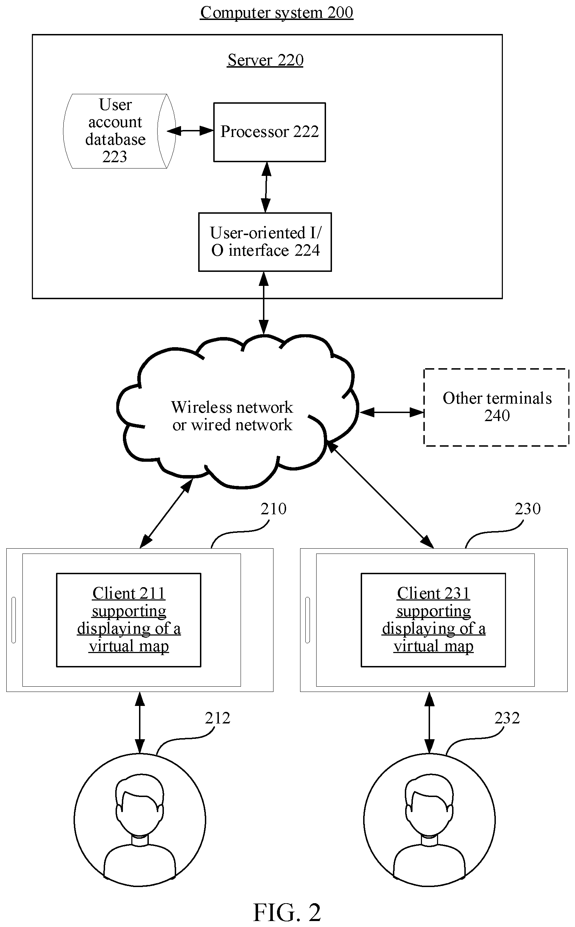

FIG. 2 is a structural block diagram of a computer system according to an embodiment of the present disclosure. A computer system 200 includes: a first terminal 210, a server 220, and a second terminal 230.

A client 211 supporting displaying a virtual map interface is installed and runs on the first terminal 210. The client 211 may be a game program. When the first terminal 210 runs the client 211, a game interface of the client 211 is displayed on a screen of the first terminal 210. The first terminal 210 is a terminal used by a first user 212. A first account is logged into on the first terminal 210.

A client 231 supporting displaying the virtual map interface is installed and runs on the second terminal 230. The client 231 may be a game program. When the second terminal 230 runs the client 231, a game interface of the client 231 is displayed on a screen of the second terminal 230. The second terminal 230 is a terminal used by a second user 232. A second account is logged into on the second terminal 230.

In all embodiments of the present disclosure, the first user 212 and the second user 232 may be users in the same camp.

In all embodiments of the present disclosure, clients installed on the first terminal 210 and the second terminal 230 may be the same, or clients installed on the two terminals may be clients of the same type on different operating system platforms (Android or IOS). The first terminal 210 may be one of a plurality of terminals, and the second terminal 230 may be another one of the plurality of terminals. Hereinafter only the first terminal 210 and the second terminal 230 are used as an example for description. Device types of the first terminal 210 and the second terminal 230 may be either the same or different, and the device type includes at least one of: a smartphone, a wearable device, a smart television, a vehicle-mounted terminal, a tablet computer, an e-book reader, an MP3 player, an MP4 player, a laptop portable computer, and a desktop computer. Hereinafter it is taken as an example that the terminal is a smartphone.

In all embodiments of the present disclosure, when the first user 212 performs a region-marking operation on a virtual map in the game interface displayed by the first terminal 210, the first terminal 210 may generate a region identifier for the region-marking operation and displays the region identifier on the virtual map in the game interface of the first terminal 210. The server 220 may synchronize the region-marking operation and the region identifier between the terminals and display the region identifier on a virtual map in the game interface of the second terminal 230 controlled by the second user 232. An objective of performing region marking in the same camp is implemented, and efficiency of transmitting game information between the first user 212 and the second user 232 is improved.

It is appreciated that there may be more or fewer terminals. For example, there may be only one terminal, or there may be six, eight, or more terminals. A quantity of terminals and device types are not limited herein.

FIG. 2 only shows two terminals, but a plurality of other terminals 240 may access the server 220 in different embodiments. In all embodiments of the present disclosure, one or more terminals 240 may be further terminals corresponding to developer(s). A development and editing platform of a client supporting displaying a virtual map interface is installed on the terminal 240. The developer may edit and update the client on the terminal 240 and transmit an updated client installation package to the server 220 through a wired or wireless network. The first terminal 210 and the second terminal 230 may download the client installation package from the server 220 to implement updating of the clients.

The first terminal 210, the second terminal 230, and the terminal 240 may be connected to the server 220 through a wireless network or a wired network.

The server 220 includes at least one of: a single server, a plurality of servers, a cloud computing platform, or a virtualization center. The server 220 is configured to provide a backend service for a client supporting a three-dimensional virtual environment. In all embodiments of the present disclosure, the server 220 may be responsible for primary computing work, and the terminal is responsible for secondary computing work. Alternatively, the server 220 takes secondary computing work and the terminal takes primary computing work. Alternatively, the server 220 and the terminal perform collaborative computing by using distributed computing architecture.

In all embodiments of the present disclosure, the server 220 may include a processor 222, a user account database 223, and a user-oriented input/output interface (I/O interface) 224. The processor 222 is configured to load instructions stored on the server 220, and process data in the user account database 223. The user account database 223 is configured to store data of user accounts used by the first terminal 210, the second terminal 230, and the terminal 240, such as a user account picture, a user account nickname, a game effectiveness index of the user account, a service region in which the user account is located, an object owned by the user account, and a sharing relationship between the user account and another account. The user-oriented I/O interface 224 is configured to establish communication with the first terminal 210 and/or the second terminal 230 through a wireless network or a wired network to exchange data.

Information (including, but not limited to, user equipment information, user personal information, and the like), data (including, but not limited to, data for analysis, stored data, displayed data, and the like), and signals involved in the present disclosure are authorized by a user or are fully authorized by all parties, and collection, use, and processing of related data need to comply with related laws and regulations and standards of related countries and regions. For example, all player operation data involved in the present disclosure is obtained with sufficient authorization.

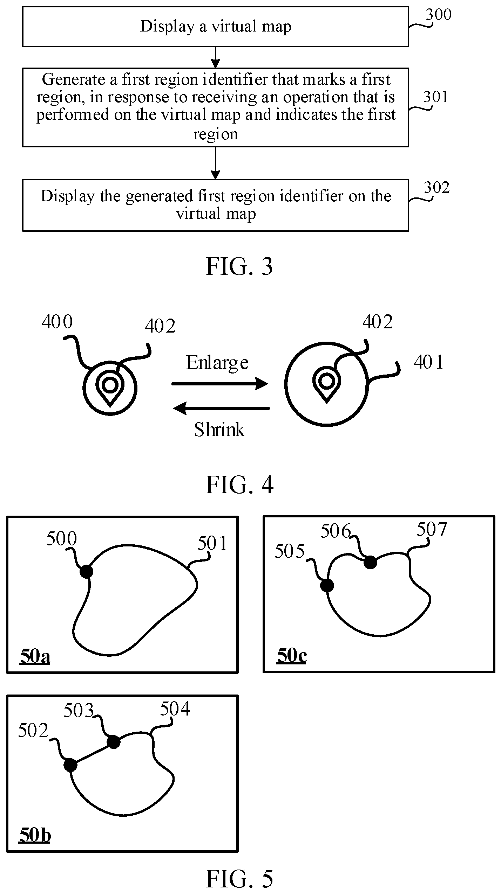

FIG. 3 is a flowchart of a method for marking a virtual map according to an embodiment of the present disclosure. The method is executable by a terminal, and the method includes the following operations.

Operation 300: Display a virtual map.

In all embodiments of the present disclosure, the terminal may display a virtual scenario through a target application, and the virtual scenario is established with reference to a virtual land, a virtual terrain, and a virtual block placed in the virtual land. In order to further enable a user to better understand the virtual scenario, a virtual map may be drawn for the virtual scenario. In all embodiments of the present disclosure, the virtual map may comprise terrain information, i.e., information describing the virtual land or the virtual terrain of the virtual scenario. Different virtual resources on the virtual map may be identified using different symbols, colors, or text. For example, the virtual scenario includes a virtual building, a virtual river, and a virtual transmitting point. In the virtual map, the virtual building is marked by a house symbol, the virtual river may be marked by a blue river symbol, and the virtual transmitting point may be marked by using a kaleidoscope symbol.

Display forms of the virtual map in the target application include global display and partial display.

When the virtual map is displayed in a global display form in the target application, the virtual map may be called a global virtual map, which is configured for showing a map of a complete virtual scenario.

When the virtual map is displayed in a partial display form in the target application, the virtual map may be called a thumbnail virtual map, which is configured for showing a map of a part of virtual scenario within a preset range centered on a virtual object (e.g., a player character) or showing a map of a part of a virtual scenario within a preset range around the virtual object.

In all embodiments of the present disclosure, a global map control may be displayed in the virtual scenario. The global virtual map is displayed in the target application in response to receiving a trigger operation on the global map control. On the global virtual map, a user may perform an operation that triggers a point, may mark a point, and may transfer game information to a teammate.

Operation 301: Generate a first region identifier that marks a first region of the virtual map, in response to receiving an operation that is performed on the virtual map and indicates the first region.

The operation indicating a first region is an operation indicating a partial region or an entire region of the virtual map. After receiving the operation indicating a first region, the terminal generates the first region identifier for the operation indicating the first region. In all embodiments of the present disclosure, the operation indicating the first region may include any one of: a click/tap operation, a double-click/tap operation, a long press operation, a voice operation, a peripheral instruction, a triple-click/tap operation, and the like.

Herein a form of the first region identifier is not limited. In all embodiments of the present disclosure, parameters of the first region identifier may include a shape, a color, transparency, a frame, brightness, a size, or the like. In all embodiments of the present disclosure, the first region identifier may cover and occlude the partial region of the virtual map. In all embodiments of the present disclosure, the first region identifier may be a translucent identifier, and the partial region marked by the first region identifier is still visible on an interface.

In all embodiments of the present disclosure, several marking options may be displayed on the virtual map. The first region identifier is generated using a first marking option is in response to the first marking option being selected. The several marking options are distributed at several positions on the virtual map. Each marking option is configured for generating its respective region identifier.

Alternatively or additionally, in response to receiving an operation that triggers a point on the virtual map, a first region identifier is statically generated according to the triggered first point. For example, in response to receiving the trigger operation, the first region identifier having a fixed size is displayed on a top of the position of the first point, and the position of the first point is marked on the first region identifier. In this case, the first region identifier may be a transparent or translucent identifier.

Alternatively or additionally, in response to receiving an operation that triggers a point on the virtual map continuously, the first region identifier is generated as a dynamic identifier that changes in duration of the continuous trigger operation on the first point. For example, in response to receiving a long-press operation on the first point, the region marked by the first region identifier expands/shrinks during the long-press operation. A specific process of generating the first region identifier in this case may refer to four exemplary cases described in following description.

Operation 302: Display the first region identifier on the virtual map.

In all embodiments of the present disclosure, identifiers representing various virtual resources may be displayed on the virtual map. For example, a building identifier representing a virtual building, a task identifier representing a virtual task point, and a resource identifier representing a virtual resource are displayed on the virtual map. All the identifiers displayed in the region marked by using the first region identifier are highlighted. In all embodiments of the present disclosure, all the identifiers displayed in the region marked by the first region identifier may be highlighted, and the types of the virtual resources represented by these identifiers are broadcasted to other user(s). For example, three virtual buildings and two virtual resources are located in the region marked by the first region identifier, and the terminal displays resource prompt information "There are three virtual buildings and two virtual resources in this region". Alternatively or additionally, the terminal broadcasts prompt information.

In all embodiments of the present disclosure, a point identifier that marks a point may be displayed on the first region identifier (i.e., within the region marked by the first region identifier). For example, a player performs a region-marking operation at a first point on the virtual map, and a point identifier marking the first point is displayed on the generated first region identifier. In all embodiments of the present disclosure, the first region identifier may be highlighted or flashed at a time interval to prompt the existence of the first region identifier on the virtual map.

In all embodiments of the present disclosure, a first identifier in a first state is displayed at the first point in response to a virtual interactive trigger being located at a position represented by the first point on the virtual map, and the first identifier in a second state is displayed at the first point in response to no virtual interactive trigger being located at the position represented by the first point on the virtual map. The first state and the second state differ in at least one of: an icon, a display form, a color, a font, transparency, or the like, of the first identifier. For example, when a virtual trigger is placed at the position represented by the first point, a house icon (i.e., an icon in a shape of a house) is displayed at the first point, and when no virtual trigger is placed at the position represented by the first point, a round-point icon (i.e., an icon in a shape of a round point) is displayed at the first point.

Herein a region marking function is provided for a player. The operation indicating the first region is performed on a partial region of the virtual map to generate a first region identifier that marks the partial region. Compared with the related art in which only a single point is marked, the player may mark partial regions of the virtual map. The partial region is marked as a whole and thus more game information can be transferred through the single marking operation, which improves the efficiency of transmitting game information. For example, when the player is in a special scenario and transmits game information directly using the region identifier, the efficiency of transmitting the game information between players can be improved, and the game experience is also improved. For example, when virtual resources are not uniformed distributed in different regions in the virtual scenario, the player may mark a region rich in resources (e.g., an area including more virtual resources or virtual triggers) on the virtual map. Thus, the generated first region identifier provides more game information for the player, so that the player can intuitively learn the region rich in resources through viewing the first region identifier. Thereby, the player's sensibility to game resources is improved.

Details of generating the first region identifier mentioned in operation 301 and operation 302 are illustrated hereinafter.

In a first embodiment, the operation indicating a first region is an operation that triggers a point on the virtual map.

The operation that triggers a point on the virtual map (hereinafter called "point triggering operation") may be implemented as any one of: a click/tap operation, a double-click/tap operation, a long press operation, a speech instruction, an instruction input by a peripheral device, a triple-click/tap operation, or the like, which is performed on the point.

In all embodiments of the present disclosure, the first region identifier may be generated in response to receiving the point triggering operation, where the first region identifier is adjustable during the point triggering operation, and a position of the first point is marked on the first region identifier. For example, a player performs a click/tap operation on point a on a virtual map, and the terminal generates, in response to the click/tap operation, the first region identifier on which the position of point a is marked. For example, the first region identifier may be an identifier centered on the first point or may be an identifier not centered on the first point. The present disclosure is not limited to the above examples. The first region identifier may be adjustable (i.e., it may change in its display form) during the point triggering operation. In all embodiments of the present disclosure, the first region identifier may be configured for covering/occluding its marked partial region, which includes the first point, of the virtual map when being displayed. Hence, in order to address the issue of only a single mark generated for the first point, a region can be marked on a basis of the first point. That is, much terrain information can be marked using the first region identifier, improving efficiency of transmitting game information between players.

The point triggering operation may be implemented as a continuous operation such as a long press or may be implemented as a single click/tap operation.

(1) When the point triggering operation is implemented as the single click/tap operation, the first region identifier may be generated according to the triggered first point as follows. A size of a region marked by the first region identifier (i.e., a display size of the first region identifier) is preset. In this case, after the first region identifier is generated, an area modifying control is displayed in the target application. The area modifying control is configured for adjusting the size of the region marked the first region identifier (i.e., adjusting a display size of the first region identifier). For example, the area modifying control includes an enlargement control, a shrink control, and an area-value input control. In response to receiving a trigger operation on the enlargement control, the size of the region marked by the first region identifier is increased. In response to receiving a trigger operation on the shrink control, the size of the region marked by the first region identifier is reduced. In response to receiving a trigger operation on the area-value input control, a value of an area inputted by the player is read, and the size of the region marked by the first region identifier is adjusted to be this value.

(2) When the point triggering operation is implemented as the continuous operation, the size of the region marked by the first region identifier is scaled to generate the first region identifier. For example, when the player long-presses the first point, the adjustable first region identifier is generated at the first point. In all embodiments of the present disclosure, during the continuous operation on the first point, a process of varying the size of the region marked by the first region identifier (i.e., a display size of the first region identifier) may be displayed on the virtual map. Hence, the player can intuitively determine the region marked by the first region identifier, thereby improving accuracy and convenience of marking the region.

In all embodiments of the present disclosure, when the point triggering operation is the continuous operation, a size of the region marked by the first region identifier may depend on duration of the point triggering operation. In other words, during a period in which the continuous trigger operation on the first point on the virtual map lasts, the size of region marked by the first region identifier keeps changing. As an example, in response to receiving the continuous trigger operation on the first point, the initial size of the region marked by the first region identifier is a minimum size. As time lapses, the size of region marked by the first region identifier gradually increases from the minimum size to a maximum size, for example, at a varying rate or a constant rate. When the size of region marked by the first region identifier is enlarged to the maximum range, it shrinks from the maximum size back toward the minimum size at the varying rate or the constant rate. As long as the point triggering operation lasts, the above enlargement-and-shrinkage is cyclically performed. The minimum size and the maximum size are preset. The above process is also a process of changing the display size of the first region identifier and thus is visible on the virtual map. When the size reaches the player's desirable size, the point triggering operation is terminated. It may not be necessary to make any other adjustment, which improves accuracy of marking a region using the region identifier.

In all embodiments of the present disclosure, the region marked by the first region identifier may be a circular region. In response to receiving the continuous trigger operation on the first point on the virtual map, a radius of the region marked by the first region identifier changes, and the region is always centered at the first point. As shown in FIG. 4, after a point triggering operation on a point 402 is received, the size of the region marked by the first region identifier is enlarged at a constant speed while the region is centered at the point 402. The region starts to be shrunk at a constant speed after the region is enlarged to be a region 401 having a maximum radius m, and the region restarts to be enlarged at a constant speed after the region is shrunk to a region 400 having a minimum radius n. m is greater than n, and they may be positive numbers when the radius are in unit lengths. During the continuous operation , the size of region marked by the first region identifier changes between the radius m and the radius n in a cyclical manner. In addition, the region marked by the first region identifier is a circular region with its radius being enlarged and shrunk. Therefore, in this process, a player only needs to perform the continuous trigger operation on a point on a virtual map to monitor a size of the circular region marked by the region identifier in a game interface, which improves flexibility and convenience of the player for region marking.

In a second embodiment, the operation indicating the first region is implemented as a press operation.

When receiving the continuous press operation on the first point on the virtual map, the terminal detects a pressing force applied by of the press operation, and a size of the region marked by the first region identifier (i.e., the display size of the first region identifier) changes along with magnitude of the pressing force to generate the first region identifier. The pressing force may be directly proportional to the size of the region (i.e., to a display size of the first region identifier). In other words, a larger pressing force indicates a larger size of the region marked by the first region identifier. Here an upper limit may be set for the size. When the pressing force is greater than a threshold, the size of the region marked by the first region identifier is equal to a maximum size and cannot be increased further. In this solution, for the trigger operation on the first point, the size of the first region identifier is adjusted according to the pressing force applied on the first point, so that a procedure of region marking by the player is simplified, and diversity of performing the region-marking operation by the player is further enriched.

In a third embodiment, the operation indicating the first region is implemented as a sliding operation.

In response to receiving a sliding operation on the first point (e.g., passing the first point) on the virtual map, a sliding trajectory of the sliding operation may be determined to serve as at least a part of a contour of the first region identifier. In this solution, in response to the trigger operation on the first point, the sliding trajectory of the sliding operation serve as at least a part of the contour of the first region identifier, so that the procedure of region marking is simplified, and the diversity of performing the region-marking operation by the player is enriched.

In all embodiments of the present disclosure, the terminal may determine the contour of the first region identifier according to a start position and an end position of the sliding operation to generate the first region identifier.
(1) In response to the start position and the end position being the same position, the sliding trajectory of the sliding operation is determined to define a closed region, and the first region identifier is generated to have a contour just the same as the closed region, and the region marked by the first region identifier is the closed region enclosed by the sliding trajectory.
(2) When the start position and the end position are not the same position, the sliding trajectory of the sliding operation is determined to define an open region, and the terminal determines a line connecting the start position and the end position according to an orientation of the sliding trajectory, such that the open region is closed. The contour of the first region identifier is determined to be the same as that of the closed region to generate the first region identifier, where the orientation of the trajectory indicates a heading direction of the sliding operation. Alternatively, the terminal may directly connect the start position and the end position using a straight line to form a closed region and uses the contour of closed region as the contour of the first region identifier.

Reference is made to FIG. 5, which is a schematic diagram of generating a first region identifier through a sliding operation. As shown in subfigure 50a of FIG. 5, a start position 500 and an end position 500 of the sliding operation are the same, and the first region identifier is generated by using the sliding trajectory 501 of the sliding operation as its contour. As shown in subfigure 50b of FIG. 5, a start position 502 and an end position 503 of the sliding operation are not the same position, the start position 502 and the end position 503 are connected using a straight line, and the first region identifier is generated by using the connected closed sliding trajectory 504 as its contour. As shown in subfigure 50c of FIG. 5, a start position 505 and an end position 506 of the sliding operation are not the same position, the start position 505 and the end position 506 are connected using a curve determined according to a trajectory orientation of a sliding trajectory 507, and the first region identifier is generated by using the connected closed sliding trajectory 507 as its contour.

In a fourth embodiment, the operation indicating the first region is implemented as a hover operation.

In response to receiving a hover operation at the first point on the virtual map, the size of region marked by the first region identifier is changed according to a distance between input tool of the hover operation and the terminal to generate the first region identifier. In all embodiments of the present disclosure, the distance may be directly proportional to the size of the region. In other words, a larger distance indicates a larger size. Here an upper limit may be set for the size. When the distance is greater than a distance threshold, the size of region marked by the first region identifier is kept being a maximum size and cannot be increased further. The diversity of performing the region-marking operation by the player is enriched in this manner.

The first region identifier may alternatively be generated by using another continuous trigger operation. The present disclosure is not limited to the above examples.

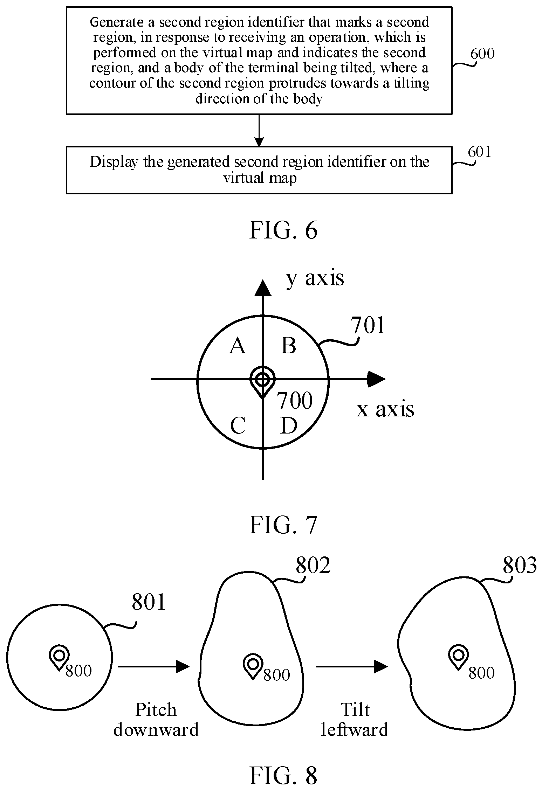

Generation of the first region identifier is described with reference to the foregoing embodiments, and a method for adjusting the size of the first region identifier is described in detail below. Reference is made to FIG. 6, which is a flowchart of a method for marking a virtual map according to an embodiment of the present disclosure. The method is executable by a terminal.

Operation 600: Generate a second region identifier that marks a second region, in response to receiving an operation, which is performed on the virtual map and indicates the second region, and a body of the terminal being tilted, where a contour of the second region protrudes towards a tilting direction of the body.

In all embodiments of the present disclosure, the second region may be a partial region of the virtual map.

Here the partial region on the virtual map is marked by the second region identifier.

When receiving the operation indicating the second region, the terminal detects whether the terminal body is tilted. The terminal may detect whether the terminal body is tilted by using a gyroscope assembly (an angular velocity sensor) arranged in the terminal. The gyroscope assembly is configured to measure a rotation angular velocity of the terminal when a physical offset or a tilt is generated, and a function of using the gyroscope assembly is provided in the target application. Herein the function is also called a gyroscope mechanism. The gyroscope mechanism is introduced into the target application, so that when the target application is used, it may be detected whether the terminal body is tilted or rotated .

In other words, when receiving the operation indicating the second region, the terminal detects whether the gyroscope mechanism is enabled and triggered for the terminal or the target application.

When the gyroscope mechanism is not triggered in the terminal or the target application, the second region identifier may be generated in a same manner defined by operation 300 and operation 301.

When the gyroscope mechanism is triggered in the terminal or the target application, the second region identifier is generated in response to receiving the point triggering operation performed at the second point on the virtual map. When detecting that the terminal body is tilted or rotated, the terminal determines that the tilting operation is received and generates the second region identifier of which the contour protrudes toward a direction indicated by the tilting operation.

Here the gyroscope mechanism is introduced. When a region-marking operation is performed, a size of a region marked by the region identifier is adjusted with reference to a tilt angle of the terminal body. Hence, a requirement of more flexible and diversified region-marking operation is met, and a region of an irregular shape can be marked. The procedure of region marking by the player is simplified, and the diversity of performing the region-marking operation by the player is further enriched.

When the operation indicating the second region and the tilting operation are both received, a manner of adjusting the region marked by the second region identifier may include at least one of the following manners.

In a first manner, a region marked by the second region identifier is expanded leftwards (e.g., a contour of the displayed the second region identifier protrudes leftwards) , in response to receiving the operation indicating the second region and receiving a first tilting operation, where the first tilting operation lifts a right side of the body of terminal with respect to a left side of the body of the terminal.

In a second manner, a region marked by the second region identifier is expanded rightwards (e.g., a contour of the displayed the second region identifier protrudes rightwards) , in response to receiving the operation indicating the second region and receiving a second tilting operation, where the second tilting operation lifts a left side of the body of terminal with respect to a right side of the body of the terminal.

In a third manner, a region marked by the second region identifier is expanded downwards (e.g., a contour of the displayed the second region identifier protrudes downwards) , in response to receiving the operation indicating the second region and receiving a third tilting operation, where the third tilting operation lifts a front side (e.g., a top edge of a display screen facing upwards or substantially upwards) of the body of terminal with respect to a back side (e.g., a bottom edge of the display screen facing upwards or substantially upwards)of the body of the terminal.

In a fourth manner, a region marked by the second region identifier is expanded upwards (e.g., a contour of the displayed the second region identifier protrudes upwards) , in response to receiving the operation indicating the second region and receiving a fourth tilting operation, where the fourth tilting operation lifts a back side (e.g., a bottom edge of a display screen facing upwards or substantially upwards) of the body of terminal with respect to a front side (e.g., a top edge of the display screen facing upwards or substantially upwards) of the body of the terminal.

In all embodiments of th present disclosure, a center of the terminal body may serve as an origin of a coordinate system, and a transverse direction of the terminal body serve as a horizontal axis, e.g., an x axis, and a longitudinal direction of the terminal body serves a vertical axis, e.g., a y axis. The foregoing four manners correspond to tilting the terminal body towards the four half-axes in the coordinate system. The first manner is tilting toward the negative half of x axis (towards left of the origin) of the coordinate system. The second manner is tilting toward the positive half of x axis (towards right of the origin) of the coordinate system. The third manner is tilting toward the negative half of y axis (towards a bottom of the origin) of the coordinate system. The fourth manner is tilting toward the positive half of y axis (towards a top of the origin) of the coordinate system. As shown in FIG. 7, when the operation indicating the second region is received at the second point 700, the second region identifier 701 is generated at the second point 700. The coordinate system is established, where the second point 700 is the origin, the traversal axis of the terminal body passing the second point 700 is the x axis, and the longitudinal axis of the terminal body passing the second point 700 is the y axis. The coordinate system is thus divided into four quadrants, namely, quadrant A, quadrant B, quadrant C, and quadrant D.

Tilt angles with respect to the x axis and the y axis may be detected when the operation indicating the second region is received at on the second point. A size of the region marked by the second region identifier is adjusted according to a first tilt angle with respect to the x axis and a second tilt angle with respective to the y axis.

It is taken as an example that the tilting is along the x axis. When the first tilt angle of the terminal body with respect to the x axis is positive, it indicates that the right side of the terminal body is lifted with respect to the left side of the terminal body, and a contour of the region marked by the second region identifier (i.e., a contour of the displayed second region identifier) in the quadrant A and the quadrant C is extended outward according to the first tilt angle. A distance of moving an anchor point, which is located at the contour of the second region identifier between the quadrant A and the quadrant C, along the x axis may refer to the following equation 1. As shown in FIG. 7, assuming the terminal body tilts along the x axis and the first tilt angle is +1°, the anchor point between the quadrant A and the quadrant C is moved by distance q along the negative x-axis direction, where q is calculated according to the equation 1. When the first tilt angle with respect to the x axis is negative, it indicates that the left side of the terminal body is lifted with respect to the right side of the terminal body, and a contour of the region marked by the second region identifier in the quadrant B and the quadrant D is extended outward according to the first tilt angle. A distance of moving an anchor point, which is located at the contour of the second region identifier between the quadrant B and the quadrant D, along the x axis may also refer to the following equation 1. Equation 1: $x = \frac{\left(max-min\right)}{90 ° - h} .$

In the equation 1, max is a maximum tilt angle of the terminal body, min is a minimum tilt angle of the terminal body, h is the first tilt angle, and x is the distance by which the anchor point is moved along the x axis.

It is taken as an example that the tilting is along the y axis. When the second tilt angle of the terminal body with respect to the y axis is positive, it indicates that the back side of the terminal body is lifted with respect to the front side of the terminal body, and a contour of the region marked by the second region identifier (i.e., a contour of the displayed second region identifier) in the quadrant A and the quadrant B is extended outward according to the second tilt angle. A distance of moving an anchor point, which is located at the contour of the second region identifier between the quadrant A and the quadrant B, along the y axis may refer to the following equation 2. As shown in FIG. 7, assuming the terminal body tilts along the y axis and the second tilt angle is +1°, the anchor point between the quadrant A and the quadrant B is moved by distance w along the negative y-axis direction, where w is calculated according to the equation 2. When the second tilt angle with respect to the y axis is negative, it indicates that the front side of the terminal body is lifted with respect to the right side of the terminal body, and a contour of the region marked by the second region identifier in the quadrant C and the quadrant D is extended outward according to the second tilt angle. A distance of moving an anchor point, which is located at the contour of the second region identifier between the quadrant C and the quadrant D, along the y axis may also refer to the following equation 2. Formula 2: $y = \frac{\left(max-min\right)}{90 ° - k} .$

In the equation 2, max is a maximum tilt angle of the terminal body, min is a minimum tilt angle of the terminal body, k is the second tilt angle, and y is the distance by which the anchor point is moved along the y axis.

In an actual application process, the terminal body may be tilted with respect to both the x axis and the y axis, and x and y are dynamic values that change in real time. The terminal adjusts the distances of all anchor points on the contour of the second region identifier to the origin according to the detected first tilt angle and the detected second tilt angle and generates an adjusted second region identifier using the adjusted anchor points.

Here upper limits may be set on a change of x caused by the first tilt angle and a change of y caused by the second tilt angle. In all embodiments of the present disclosure, when any of the first tilt angle and the second tilt angle exceeds 90°, the tilt angle is determined to reach its upper limit, and the size of the region marked by the second region identifier cannot be adjusted further along that direction.

Operation 601: Display the generated second region identifier on the virtual map.

In all embodiments of the present disclosure, a process of adjusting the region marked by the second region identifier according to the tilting operation, as illustrated operation 600, may be displayed on the virtual map, for example, as adjusting the display size of the second region identifier. Thereby, a player can intuitively view a process of changing the size of the region marked by the second region identifier on the virtual map.

In all embodiments of the present disclosure, in response to receiving the operation indicating the second region at the second point, the second region identifier is generated, and a second identifier marking the second point is also generated.

Reference is made to FIG. 8, which is a schematic diagram of an interface of adjusting the second region identifier according to a tilt angle of a terminal body. Here the foregoing first region identifier serves as the second region identifier. The terminal receives the operation indicating the first region on the first point 800 on the virtual map to generate the first region identifier 801. During the continuous trigger operation on the first point 800, a player pitches the terminal body downwards, and an upper region of the first region identifier 801 is extended outward to form a new first region identifier 802. The player continues to tilt the terminal body leftwards to lift the right side of the terminal body with respect to the left side of the terminal body, such that a left region of the new first region identifier 802 is extended outward, to form a new first region identifier 803.

Here gyroscope mechanism is introduced. When a region-marking operation is performed, a size of a region marked by a region identifier is adjusted with reference to a tilt angle of a terminal body. In addition, the region identifier protrudes in different directions for different tilting operations, and a plurality of tilting operations can be further combined to meet a requirement on more flexible and versatile region-marking operations, thereby marking a region of an irregular shape.

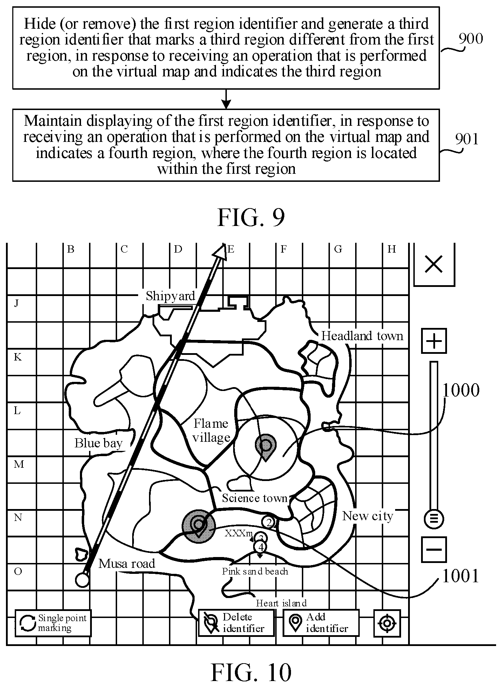

The following describes a method for modifying a region identifier in detail. Reference is made to FIG. 9, which is a flowchart of a method for marking a virtual map according to another embodiment of the present disclosure. The method is executable by a terminal.

Operation 900: Hide (or remove) the first region identifier and generate a third region identifier that marks a third region different from the first region, in response to receiving an operation that is performed on the virtual map and indicates the third region.

In all embodiments of the present disclosure, a position indicated by a first point may be marked on the first region identifier, and/or a first identifier marking the first point may be displayed on the first region identifier. In all embodiments of the present disclosure, a display center of the first region identifier may be the first point or may not be the first point. The present disclosure is not limited to the above examples.

When a player needs to update a region identifier, the player may perform a region-marking operation on a point other than the first point on the virtual map.

In other words, in response to receiving the operation indicating the third region performed on any point in a region on the virtual map and different from the region marked by the first region identifier, display transparency and/or display brightness of the first region identifier is adjusted, and the third region identifier is generated and displayed on the virtual map. The display transparency of the third region identifier may be lower than display transparency of the first region identifier, and/or the display brightness of the third region identifier may be higher than display brightness of the first region identifier. Generation and display of the third region identifier may refer to operation 301 and operation 302, and details are not described herein again. In this solution, multiple region identifiers may be displayed on the virtual map under control of the user. To save display resources, an upper limit is set for a quantity of the region identifiers that exist simultaneously. For example, at most five region identifiers can be simultaneously displayed on the virtual map, and when a 6^{th} region identifier appears, the 1^{st} region identifier is hidden or removed. As shown in FIG. 10, the first region identifier 1000 is first displayed on the virtual map for the first point. When a region-marking operation is performed on a region outside of the region marked through the first region identifier 1000, the second region identifier 1001 is generated, and display transparency of the first region identifier 1000 is increased.

In all embodiments of the present disclosure, in response to receiving the operation indicating the third region performed on the third point in a region that is on the virtual map and not marked by the first region identifier, the first region identifier for the first point may be moved to a third point and is displayed as the third region identifier. A size of the third region identifier for the third point may be determined. When the size of the region marked by the third region identifier is greater than a size of the region marked by the first region identifier, the first region identifier for the first point may be first moved to the third point, where a center of the region marked by the first region identifier overlaps with the third point, and then the display size of the first region identifier is increased until it is the same as the required display size of the third region identifier. When the size of the region marked by the third region identifier is equal to the size of the region marked by the first region identifier, the first region identifier for the first point may be moved to the third point, where a center of the region marked by the first region identifier overlaps with the third point. When the size of the region marked by the third region identifier is less than the size of the region marked by the first region identifier, the first region identifier for the first point may be first moved to the third point, where a center of the region marked by the first region identifier overlaps with the third point, and then the display size of the first region identifier is decreased until it is the same as the required display size of the third region identifier. As shown in FIG. 10, the first region identifier 1000 is first displayed on the virtual map for the first point. When the region-marking is performed (on the second point) in the region outside of the region marked by the first region identifier 1000, the second region identifier 1001 is generated, and a following animation is displayed: the first region identifier 1000 is moved such that its center is located at the second point, and the first region identifier 1000 is shrunk until a display radius of the first region identifier 1000 is the same as the required display radius of the second region identifier 1001.

In all embodiments of the present disclosure, in response to receiving a drag operation on the first region identifier, the first region identifier may be used as a region identifier of another point to form a new region identifier on the virtual map. After the drag operation ends, the terminal displays the region identifier at the destination point of the drag operation and hides or removes a first identifier that marks the first point. For example, after the first region identifier is dragged, the new region identifier is formed, a center of the new region identifier is located at a fourth point, and hence the terminal hides or removes the original first region identifier and automatically displays a second identifier that marks the fourth point.

In response to the operation indicating the third region performed on the point in the region that is on the virtual map and not marked by the first region identifier, the first region identifier is hidden or removed, and the third region identifier may be generated according to procedures of operation 301 and operation 302. The third region identifier is then displayed on the virtual map.

Hence, when the player needs to modify a range mark or adjust the range mark, a procedure of remarking is not necessary, and region marking efficiency is improved to a certain extent.

Operation 901: Maintain displaying of the first region identifier, in response to receiving an operation that is performed on the virtual map and indicates the fourth region performed, where the fourth region is located within the first region.

When the player needs to remark within the region marked by the first region identifier, a repeated process of generating the region identifier is not necessary, and displaying of the first region identifier is maintained. In this case, the first identifier marking the first point is hidden or removed, and a third identifier marking a fifth point, on which the operation indicating the fourth region is performed, is generated.

In all embodiments of the present disclosure, after any region identifier is generated, virtual triggers, virtual resources, enemy virtual objects, and/or the like that is interactable within region marked by the region identifier may be highlighted.

In other words, the first region identifier is displayed on the virtual map, and a virtual trigger within the first region identifier may be highlighted. The virtual trigger is interactable with a virtual object in a virtual scenario. The virtual trigger may be, for example, a virtual shop, a virtual task point, or a story trigger. The player can conveniently and intuitively learn resources in the virtual scenario, and a strong prompt function is provided for the player through highlighting, to improve an information obtaining capability of the player for game scenario information.

As an example, the first region identifier is displayed on the virtual map, and the virtual resources within the first region identifier are highlighted.

When the first region identifier is displayed on the virtual map, and an enemy virtual object or an artificial intelligence (AI) virtual object within the first region identifier may be highlighted.

In all embodiments of the present disclosure, a deletion control may be displayed on an interface of the target application, and the deletion control is configured for removing an identifier on the virtual map. In response to receiving a trigger operation on the deletion control, all identifiers on the virtual map are cleared, where the identifier includes the identifier marking a single point and the region identifier. All identifiers on a virtual map of a terminal of another player in the same camp may also be synchronously removed. Alternatively, in response to receiving the trigger operation on the deletion control, an identifier most recently displayed on the virtual map is removed. Alternatively, in response to receiving the trigger operation on the deletion control, an identifier displayed earliest on the virtual map is removed.

Hence, when a player needs to modify a region identifier or adjust a region identifier, a more diversified region identifier adjustment manner is provided for the player, thereby improving a sense of experience of the player during region marking and improving efficiency of performing region marking by the player.

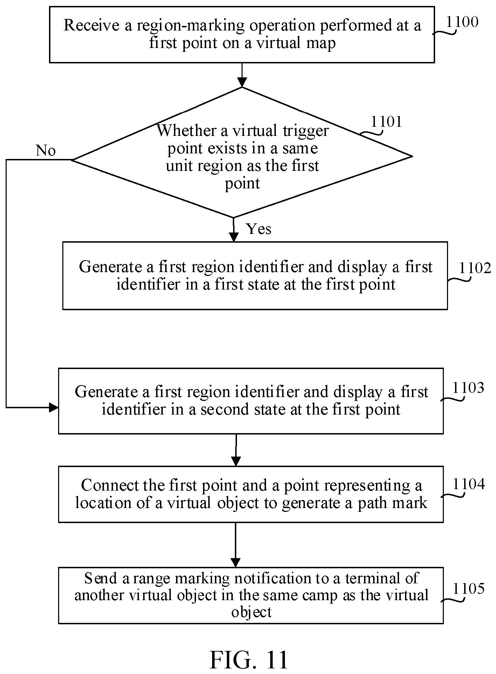

Referecne is made to FIG. 11, which is a flowchart of a method for marking a virtual map according to another embodiment of the present disclosure. The method is performed by a terminal.

Operation 1100: Receive a region-marking operation performed at a first point on a virtual map.

A procedure of this operation is the same as a procedure of operation 301, and details are not described herein again.

Operation 1101: Determine whether a virtual trigger point exists in a same unit region as the first point.

The virtual scenarios are divided into unit regions each having a preset area, and the trigger point, terrain structure, and the like required in the virtual scenario are placed in their respective unit regions.

After the region-marking operation on the first point is received, a first unit region having the first point is obtained, and it is determined whether the virtual trigger point exists in the first unit region.

If the virtual trigger point exists in the first unit, the process proceeds to operation 1102. If the virtual trigger point does not exist in the first unit, the process proceeds to operation 1103.

Operation 1102: Generate a first region identifier and display a first identifier in a first state at the first point.

In order to better prompt a player of an attribute or a function of a marking point, virtual resources or virtual triggers that exist near the marking point are displayed by using different identifiers, so that the player directly learns, from the mark identifier, whether to continue to head to the marking point. For example, different mark identifiers are set for different virtual trigger points.

Operation 1103: Generate a first region identifier and display a first identifier in a second state at the first point.

Herein the first state and the second state differ in at least one of: a size, an icon, text, or the like.

Operation 1104: Connect the first point and a point representing a location of a virtual object to generate a path mark.

After the first region identifier for the first point is generated, coordinates of the location of the virtual object are obtained, and a line, such as a dashed line, a straight line, a dasheddotted line, a wavy line, is drawn between coordinates of the first point is connected to the coordinates of the virtual object on the virtual map to generate the path mark. The path mark indicates a path that the player is prompted to control the virtual object to follow to reach the first point.

Operation 1105: Send a region-marking notification to a terminal of another virtual object in a same camp as the virtual object.

The region-marking notification is configured for prompting another player in the same camp that the player has performed a region-marking operation on the virtual map and synchronously displaying the first region identifier on a virtual map displayed on the terminal of the other player in the same camp.

Hence, a region marking function is provided for the player, and a defect that only one point can be marked at a time in the related technology is resolved. In addition, marks of points in a region identifier can be displayed in different states, thereby greatly improving a sensing capability of the player for game resources and improving efficiency of transmitting game information between players.

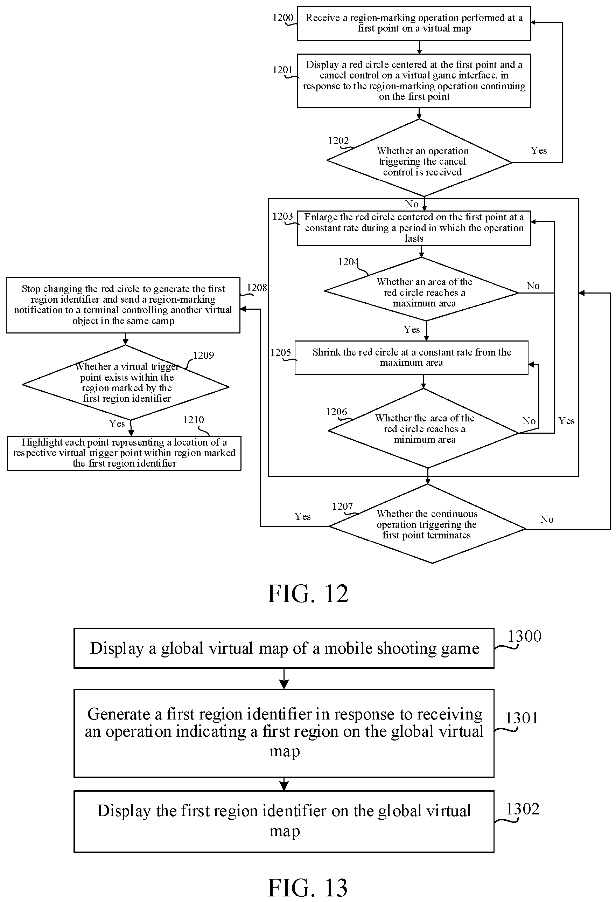

With reference to the foregoing embodiments, the following provides an embodiment of a method for marking a virtual map. Reference is made to FIG. 12, which is a flowchart of a method for marking a virtual map according to still another embodiment of the present disclosure. The method is performed by a terminal.

Operation 1200: Receive a region-marking operation performed at a first point on a virtual map.

A procedure of this operation is the same as a procedure of operation 301, and details are not described herein again.

Operation 1201: Display a red circle centered at the first point and a cancel control on a virtual game interface, in response to the region-marking operation continuing on the first point.

Here when the received trigger operation on the first point is a continuous operation, the cancel control is displayed in the interface, and the red circle is displayed at the first point.

In all embodiments of the present disclosure, the cancel control is configured for cancelling the region-marking operation on the first point.

Operation 1202: Detect whether an operation triggering the cancel control is received.

When the operation triggering the cancel control is received (within a preset period), the process proceeds to operation 1200. When the operation triggering the cancel control is not received (within the preset period), the process proceeds to operation 1200.

Operation 1203: Enlarge the red circle centered on the first point at a constant rate during a period in which the operation lasts.

Here, when a player keeps performing the trigger operation on the first point, the red circle at the first point is enlarged by using the first point as a center, and a size of the region marked by the first region identifier for the first point is increased.

Operation 1204: Determine whether an area of the red circle reaches a maximum area.

If the area (of the marked region) of the red circle reaches a preset maximum area, the process proceeds to operation 1205. If the area of the red circle does not reach the preset maximum area, operation 1203 continues.

Operation 1205: Shrink the red circle at a constant rate from the maximum area.

Operation 1206: Determine whether the area of the red circle reaches a minimum area.

If the area (of the marked region) of the red circle reaches a preset minimum area, the process proceeds to operation 1203. If the area of the red circle does not reach the preset minimum area, operation 1205 continues.

The cyclical process from operation 1203 to operation 1206 repeats as long as the continuous trigger operation on the first point is neither cancelled nor terminated.

Operation 1207: Determine whether the continuous operation triggering the first point terminates.

If the continuous trigger operation terminates, the process proceeds to operation 1208. If the continuous trigger operation does not terminate, the cyclical process from operation 1203 to operation 1206 repeats.

Operation 1208: Stop changing the red circle to generate the first region identifier and send a region-marking notification to a terminal controlling another virtual object in the same camp.

In all embodiments of the present disclosure, when the player terminates the trigger operation on the first point, the displayed red circle at a moment of the termination may serve as the first region identifier displayed on the virtual map.

In addition, the region-marking notification is sent to the terminal corresponding to the other virtual object in the same camp, and the region-marking notification is configured for prompting a teammate that a new region identifier has been displayed on the virtual map.

Operation 1209: Detect whether a virtual trigger point exists within the region marked by the first region identifier.

Here it is detected whether the virtual trigger point exists within the region marked by the first region identifier. If the virtual trigger point exists, the process proceeds to operation 1210. If the virtual trigger point does not exist, the first region identifier is displayed normally on the virtual map.

Operation 1210: Highlight each point representing a location of a respective virtual trigger point within region marked the first region identifier.

An execution procedure of this operation is the same as the execution procedure of operation 901, and details are not described herein again.

Herein a region marking requirement is provided for a player, so that an objective of region marking can be independently achieved, and the player can generate a region identifier under a continuous trigger operation on a point, to avoid marking points frequently by the player within the same region. In addition, identifiers in different states are displayed depending on whether a virtual trigger point exists in a unit region of the triggered point, to prompt the player of a value of the point in a game, so that the player can learn game information better and faster. Moreover, all virtual trigger points within a region identifier are highlighted, to provide a strong prompt for the player, so that the player receives game information more intuitively, thereby improving efficiency of transmitting the game information between the players according to a state of the point identifier(s) within the region identifier.

The following provides a method flowchart when a method for marking a virtual map is applied to in a mobile shooting game. As shown in FIG. 13, the method includes operation 1300 to operation 1302, and the method is executable by a terminal.

Operation 1300: Display a global virtual map of a mobile shooting game.

A player may activate a shooting game on a terminal, and the global virtual map is displayed in a game interface of the shooting game. In all embodiments of the present disclosure, a thumbnail virtual map may be displayed in the game interface, and a global map control arranged around the thumbnail virtual map can be tapped or clicked to view the global virtual map.

In all embodiments of the present disclosure, the global virtual map may be configured for displaying terrain information in a virtual scenario corresponding to the shooting game, and a plurality of trigger points, a plurality of virtual buildings, a plurality of virtual supplies, and the like are arranged in the virtual scenario. In this embodiment of the present disclosure, all resources included in the virtual scenario may be displayed on the global virtual map by using different identifiers.

Operation 1301: Generate a first region identifier in response to receiving an operation indicating a first region on the global virtual map.

The operation indicating a first region is an operation of marking a partial region on the global virtual map.

The operation indicating a first region may be a single tap or click on a point or may be a continuous trigger operation on a point. In other words, in response to receiving a single tap or click on the global virtual map, the first region identifier may be directly displayed at a first point. Alternatively, in response to receiving the continuous trigger operation on the global virtual map, the first region identifier is generated at the triggered first point, and a position of the first point is marked on the first region identifier.

In all embodiments of the present disclosure, an area of the region marked by the first region identifier may be changed cyclically during the period in which the operation for triggering the first point is performed continuously.

In all embodiments of the present disclosure, the region marked by the first region identifier may be a circular region centered at the first point, and a radius of the circular region cyclically is changed during the period in which the operation for triggering the first point is performed continuously.

In all embodiments of the present disclosure, in response to canceling or terminating the continuous trigger operation on the first point, the region at a moment at which the continuous trigger operation is canceled or terminated may be determined as the first region marked by the first region identifier.

In all embodiments of the present disclosure, in response to the operation for triggering the first point being a slide passing the first point, a trajectory of the slide may be determined to serve as at least a part of a contour of the first region identifier.

In all embodiments of the present disclosure, a second region identifier that marks a second region may be generated in response to receiving an operation, which is performed on the virtual map and indicates the second region, and a body of the terminal being tilted, where the second region is a partial region of the virtual map, and a contour of the second region protrudes towards a tilting direction of the body.

In all embodiments of the present disclosure, a process of adjusting the second region identifier when the tilting operation on the terminal body is received may include at least one of the following manners.
A region marked by the second region identifier is expanded leftwards, in response to receiving the operation indicating the second region and receiving a first tilting operation, where the first tilting operation lifts a right side of the body of terminal with respect to a left side of the body of the terminal;
A region marked by the second region identifier is expanded rightwards, in response to receiving the operation indicating the second region and receiving a second tilting operation, where the second tilting operation lifts the left side of the body of terminal with respect to the right side of the body of the terminal;
A region marked by the second region identifier is expanded downwards, in response to receiving the operation indicating the second region and receiving a third tilting operation, where the third tilting operation lifts a front side of the body of terminal with respect to a back side of the body of the terminal.

A region marked by the second region identifier is expanded upwards, in response to receiving the operation indicating the second region and receiving a fourth tilting operation, where the fourth tilting operation lifts the back side of the body of terminal with respect to the front side of the body of the terminal.

In all embodiments of the present disclosure, when another region-marking operation is performed on the global virtual map, it may be determined whether the newly triggered second point falls within the region of the first region identifier.

When the second point falls within the region marked by the first region identifier, the first region identifier is kept unchanged, displaying of a first identifier marking the first point is cancelled, and a second identifier marking the second point is displayed. Alternatively, display brightness of the first identifier marking the first point is reduced, or transparency of the first identifier marking the first point is increased, such that the second mark at the second point is displayed. Alternatively, the first identifier marking the first point is still displayed, and the second identifier marking the second point is highlighted.

When the second point does not fall within the region marked by the first region identifier, or when the operation indicating a third region that is on the global virtual map and that is different from the first region marked by the first region identifier, displaying of the first region identifier is canceled, and a third region identifier is generated.

In all embodiments of the present disclosure, after a region identifier is generated on a virtual map, a region-marking notification, for example, a voice broadcast of "User aa newly marks a new range point", may be played on a terminal of a player performing region marking and a terminal controlled by a player in the same camp as the player.

In all embodiments of the present disclosure, when the region identifier generated through any foregoing procedure, it is detected whether virtual triggers, virtual resources, enemy virtual objects, or the like exists in the region marked by the region identifier. If the virtual triggers, the virtual resources, the enemy virtual objects, or the like exist, identifiers marking the virtual triggers, the virtual resources, the enemy virtual objects, or the like, are highlighted on the region identifier.

Operation 1302: Display the first region identifier on the global virtual map.

In all embodiments of the present disclosure, a process of adjusting the region marked by the first region identifier, e.g., those discussed under operation 1301, may be displayed on the global virtual map as a process of adjusting the first region identifier (i.e., adjusting a region identifier which is to be finally generated as the first region identifier). In other words, a change process of the size of the region marked by the first region identifier may be visible on the global virtual map.

Herein in a mobile shooting game, a region marking function is provided for a player, so that the player can mark a range region on a global virtual map and conveniently adjust a size and a shape of the range region with reference to a plurality of operation manners. This helps the player accurately transfer game information such as a virtual material region, a forwarding route, and a forwarding direction to a teammate, so that the player better communicates with each other by using the region identifier with muting a microphone, thereby improving efficiency of marking the virtual map and improving efficiency of transmitting game information between players.

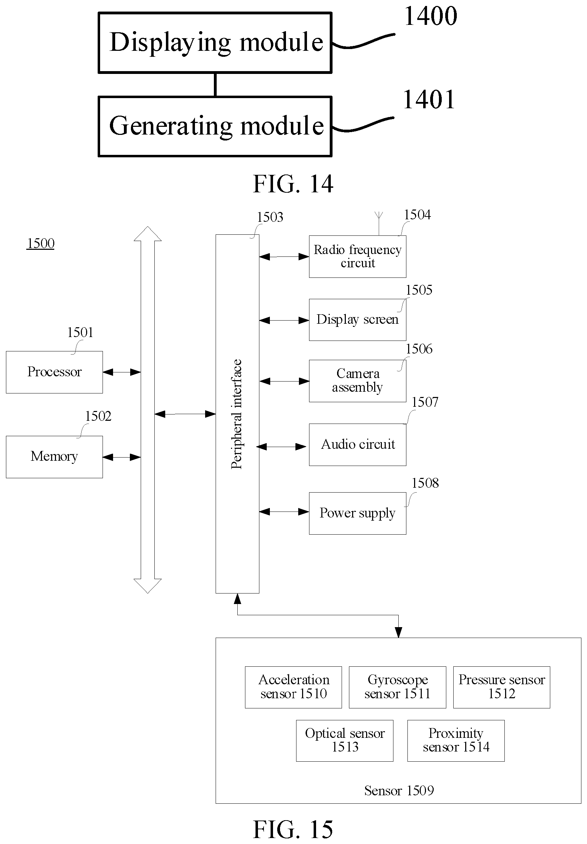

Reference is made to FIG. 14, which is a structural block diagram of an apparatus for marking a virtual map according to an embodiment of the present disclosure. The apparatus includes a displaying module 1400 and a generating module 1401.

The displaying module 1400 is configured for displaying a virtual map of a virtual scenario.

The generating module 1401 is configured for generating a first region identifier that marks a first region of the virtual map, in response to receiving an operation that is performed on the virtual map and indicates the first region.

The displaying module 1400 is further configured for displaying the generated first region identifier on the virtual map.

In all embodiments of the present disclosure, the generating module 1401 may be further configured to for generating the first region identifier in response to receiving an operation that triggers a first point on the virtual map, where the first region identifier is adjustable during the operation that triggers the first point, and a position of the first point is marked on the first region identifier.

In all embodiments of the present disclosure, the generating module 1401 may be further configured for changing an area of a region marked by the first region identifier during a period in which the operation for triggering the first point is performed continuously, where the region when the operation for triggering the first point terminates serves as the first region.

In all embodiments of the present disclosure, the generating module 1401 may be further configured for changing the area of the region marked by the first region identifier cyclically during the period in which the operation for triggering the first point is performed continuously.

In all embodiments of the present disclosure, the region marked by the first region identifier may be a circular region centered at the first point, and the generating module 1401 is further configured for changing a radius of the circular region cyclically during the period in which the operation for triggering the first point is performed continuously.

In all embodiments of the present disclosure, the generating module 1401 may be further configured for: in response to the operation for triggering the first point being a press at the first point, changing the area of the region marked by the first region identifier when a pressing force at the first point changes.

In all embodiments of the present disclosure, the generating module 1401 may be further configured for: in response to the operation for triggering the first point being a slide passing the first point, determining a trajectory of the slide to serve as at least a part of a contour of the first region identifier.

In all embodiments of the present disclosure, the generating module 1401 may be further configured for: generating a second region identifier that marks a second region of the virtual map, in response to receiving an operation, which is performed on the virtual map and indicates the second region, and a body of the terminal being tilted, and a contour of the second region protrudes towards a tilting direction of the body.

The generated second region identifier is displayed on the virtual map.

In all embodiments of the present disclosure, the generating module 1401 may be further configured for expanding a region marked by the second region identifier leftwards, in response to receiving the operation indicating the second region and receiving a first tilting operation, where the first tilting operation lifts a right side of the body of terminal with respect to a left side of the body of the terminal.

Additionally or alternatively, the generating module 1401 is further configured for expanding a region marked by the second region identifier rightwards, in response to receiving the operation indicating the second region and receiving a second tilting operation, where the second tilting operation lifts the left side of the body of terminal with respect to the right side of the body of the terminal.

Additionally or alternatively, the generating module 1401 is further configured for expanding a region marked by the second region identifier downwards, in response to receiving the operation indicating the second region and receiving a third tilting operation, where the third tilting operation lifts a front side of the body of terminal with respect to a back side of the body of the terminal.

Additionally or alternatively, the generating module 1401 is further configured for expanding a region marked by the second region identifier upwards, in response to receiving the operation indicating the second region and receiving a fourth tilting operation, where the fourth tilting operation lifts the back side of the body of terminal with respect to the front side of the body of the terminal.

In all embodiments of the present disclosure, the displaying module 1400 may be further configured for hiding or removing the first region identifier and generating a third region identifier that marks a third region that is of the virtual map and is different from the first region, in response to receiving an operation that is performed on the virtual map and indicates the third region.

In all embodiments of the present disclosure, the displaying module 1400 is further configured for highlighting a position of a virtual trigger within the first region marked by the first region identifier, wherein the virtual trigger is operable by a virtual object in the virtual scenario, and the virtual object is a movable object in the virtual scenario.

The apparatus for marking a virtual map provided in the present disclosure provides a region marking function for the player when the player marks the virtual map. In other words, the player performs marks on an area on the virtual map, to resolve a technical defect in the related technology that only points are marked. When the player is in a special scenario, game information is directly transmitted by using the region marking function, which improves the efficiency of transmitting game information. For example, when the player is in a special scenario and transmits game information directly using the region identifier, the efficiency of transmitting the game information between players can be improved, and the game experience is also improved. For example, when virtual resources are not uniformed distributed in different regions in the virtual scenario, the player may mark a region rich in resources (e.g., an area including more virtual resources or virtual triggers) on the virtual map. Thus, the generated first region identifier provides more game information for the player, so that the player can intuitively learn the region rich in resources through viewing the first region identifier. Thereby, the player's sensibility to game resources is improved.

The apparatus for marking a virtual map provided in the foregoing embodiments is only described by using division of the foregoing function modules as an example. In practical application, the foregoing functions may be allocated to and completed by different function modules according to requirements, that is, the internal structure of the apparatus is divided into different function modules to complete all or part of the functions described above. In addition, the apparatus for marking a virtual map and the method for marking a virtual map provided in the foregoing embodiments fall within a same conception. For details of a specific implementation process, refer to the method embodiments. Details are not described herein again.

Reference is made to FIG. 15, which is a block structural diagram of a computer device 1500 according to an embodiment of the present disclosure. The computer device 1500 may be a portable mobile terminal such as a smartphone, a tablet computer, a moving picture experts group audio layer III (MP3) player, and a moving picture experts group audio layer IV (MP4) player. The computer device 1500 may also be referred to as another name such as user equipment, a portable terminal, or a head-mounted computer device.

Generally, the computer device 1500 includes a processor 1501 and a memory 1502.

The processor 1501 may include one or more processing cores, for example, a 4-core processor or an 8-core processor. The processor 1501 may be implemented in at least one hardware form of a digital signal processing (DSP), a field-programmable gate array (FPGA), or a programmable logic array (PLC). The processor 1501 may also include a main processor and a co-processor. The main processor is a processor configured to process data in an awake state and is also referred to as a central processing unit (CPU). The co-processor is a low power processor configured to process data in a standby state. In all embodiments of the present disclosure, the processor 1501 may be integrated with a graphics processing unit (GPU). The GPU is configured to be responsible for rendering and drawing content that needs to be displayed on a display screen. In all embodiments of the present disclosure, the processor 1501 may further include an AI processor. The AI processor is configured to process computing operations related to machine learning.

The memory 1502 may include one or more computer-readable storage media. The computer-readable storage medium may be tangible and non-transitory. The memory 1502 may further include a high-speed random-access memory and a nonvolatile memory, for example, one or more disk storage devices or flash storage devices. In all embodiments of the present disclosure, the non-transitory computer-readable storage medium in the memory 1502 is configured to store at least one program. The at least one program is configured to be executed by the processor 1501 to implement the method for marking a virtual map provided in the embodiments of the present disclosure.

In all embodiments of the present disclosure, the computer device 1500 may alternatively include a peripheral interface 1503 and at least one peripheral device. Specifically, the peripheral device includes at least one of a radio frequency circuit 1504, a display screen 1505, a camera assembly 1506, an audio circuit 1507, and a power supply 1508.

The peripheral interface 1503 may be configured to connect at least one peripheral device related to input/output (I/O) to the processor 1501 and the memory 1502. In all embodiments of the present disclosure, the processor 1501, the memory 1502, and the peripheral interface 1503 are integrated on the same chip or circuit board. In some other embodiments, any one or two of the processor 1501, the memory 1502, and the peripheral interface 1503 may be implemented on a single chip or circuit board. This is not limited herein.

The radio frequency circuit 1504 is configured to receive and transmit a radio frequency (RF) signal, which is also referred to as an electromagnetic signal. The radio frequency circuit 1504 communicates with a communication network and another communication device by using an electromagnetic signal. The radio frequency circuit 1504 converts an electrical signal into an electromagnetic signal for transmission or converts a received electromagnetic signal into an electrical signal. In all embodiments of the present disclosure, the radio frequency circuit 1504 includes: an antenna system, an RF transceiver, one or more amplifiers, a tuner, an oscillator, a digital signal processor, a codec chip set, a subscriber identity module card, and the like. The radio frequency circuit 1504 may communicate with another terminal by using at least one wireless communication protocol. The wireless communication protocol includes, but is not limited to, a world wide web, a metropolitan area network, an intranet, generations of mobile communication networks (2G, 3G, 4G, and 5G), a wireless local area network, and/or a wireless fidelity (Wi-Fi) network. In all embodiments of the present disclosure, the radio frequency circuit 1504 may further include a circuit related to near field communication (NFC). The present disclosure is not limited to the above examples.

The display screen 1505 is configured to display a user interface (UI). The UI may include a graph, text, an icon, a video, and any combination thereof. In all embodiments of the present disclosure, the computer device 1500 includes an internal display screen and an external display screen that are close to eyes of a user object. The external display screen is configured to display, when a surrounding object interacts with the use object of the computer device 1500, an eye image of the use object. In all embodiments of the present disclosure, the display screen 1505 further has an ability of acquiring a touch signal on or above a surface of the display screen 1505. The touch signal may be inputted into the processor 1501 as a control signal for processing. The display screen 1505 is configured to provide a virtual button and/or a comment keyboard, which is also referred to as a soft button and/or a soft keyboard. In all embodiments of the present disclosure, there may be one display screen 1505, arranged on a front panel of the computer device 1500. In some other embodiments, there may be at least two display screens 1505, respectively arranged on different surfaces of the computer device 1500 or designed in a foldable shape. In still some other embodiments, the display screen 1505 may be a flexible display screen, arranged on a curved surface or a folded surface of the computer device 1500. Even, the display screen 1505 may be set to be a non-rectangular irregular figure, namely, a special-shaped screen. The display screen 1505 may be prepared by using materials such as a liquid crystal display (LCD), an organic light-emitting diode (OLED), or the like.

The camera component 1506 is configured to acquire images or videos. In all embodiments of the present disclosure, the camera assembly 1506 includes an internal camera and an external camera. Generally, the internal camera is configured to photograph and acquire eye pose data of the user. In all embodiments of the present disclosure, there are at least two external cameras, which are respectively any of a main camera, a depth-of-field camera, and a wide-angle camera, to achieve background blur through fusion of the main camera and the depth-of-field camera and achieve panoramic photographing and augmented reality (AR) through fusion of the main camera and the wide-angle camera. In all embodiments of the present disclosure, the camera component 1506 may further include a flash. The flash may be a single-color temperature flash or may be a double-colored temperature flash. A double-colored temperature flash refers to a combination of a warm light flash and a cool light flash and may be configured for light compensation under different color temperatures.

The audio circuit 1507 is configured to provide an audio interface between the user and the computer device 1500. The audio circuit 1507 may include a microphone and a speaker. The microphone is configured to acquire acoustic waves of a user and an environment and convert the acoustic waves into an electrical signal to input to the processor 1501 for processing, or input to the radio frequency circuit 1504 for implementing voice communication. For the purpose of stereo acquisition or noise reduction, there may be a plurality of microphones, respectively arranged at different parts of the computer device 1500. The microphone may also be an array microphone or an omni-directional acquisition type microphone. The speaker is configured to convert electrical signals from the processor 1501 or the radio frequency circuit 1504 into an acoustic wave. The speaker may be a conventional film speaker or maybe a piezoelectric ceramic speaker. When the speaker is the piezoelectric ceramic speaker, the speaker not only may convert an electrical signal into acoustic waves audible to a human being but also may convert an electrical signal into acoustic waves inaudible to a human being, for ranging and other purposes. In all embodiments of the present disclosure, the audio circuit 1507 may further include an earphone jack.

The power supply 1508 is configured to supply power to assemblies in the computer device 1500. The power supply 1508 may be an alternating current, a direct current, a primary battery, or a rechargeable battery. When the power supply 1508 includes a rechargeable battery, and the rechargeable battery may be a wired rechargeable battery or a wireless rechargeable battery. The wired rechargeable battery is a battery charged through a wired line, and the wireless rechargeable battery is a battery charged through a wireless coil. The rechargeable battery may further be configured to support a fast-charging technology.

In all embodiments of the present disclosure, the computer device 1500 further includes one or more sensors 1509. The one or more sensors 1509 include, but are not limited to, an acceleration sensor 1510, a gyroscope sensor 1511, a pressure sensor 1512, an optical sensor 1513, and a proximity sensor 1514.

The acceleration sensor 1510 may detect a magnitude of acceleration on three coordinate axes of a coordinate system established by the computer device 1500. For example, the acceleration sensor 1510 may be configured to detect components of a gravity acceleration on three coordinate axes. The processor 1501 may control, according to a gravity acceleration signal acquired by the acceleration sensor 1510, the display screen 1505 to display the user interface in a landscape mode or a portrait mode. The acceleration sensor 1510 may further be configured to acquire motion data of a game or a user.

The gyroscope sensor 1511 may detect a body direction and a rotation angle of the computer device 1500. The gyroscope sensor 1511 may cooperate with the acceleration sensor 1510 to acquire a three-dimensional action of a user on the computer device 1500. The processor 1501 may implement the following functions according to data acquired by the gyroscope sensor 1511: motion sensing (for example, changing the UI according to a tilting operation of the user), image stabilization during shooting, game control, and inertial navigation.

The pressure sensor 1512 may be arranged on a side frame of the computer device 1500 and/or a lower layer of the display screen 1505. When the pressure sensor 1512 is arranged on the side frame of the computer device 1500, a holding signal of the user on the computer device 1500 may be detected and left/right-hand recognition or a quick operation is performed according to the holding signal. When the pressure sensor 1512 is arranged on the lower layer of the display screen 1505, an operable control on the UI may be controlled according to a pressure operation of the user on the display screen 1505. The operable control includes at least one of: a button control, a scroll-bar control, an icon control, and a menu control.

The optical sensor 1513 is configured to acquire ambient light intensity. In an embodiment, the processor 1501 may control display brightness of the display screen 1505 according to the ambient light intensity acquired by the optical sensor 1513. Specifically, when the ambient light intensity is relatively high, the display brightness of the display screen 1505 is increased. When the ambient light intensity is relatively low, the display brightness of the display screen 1505 is reduced. In another embodiment, the processor 1501 may further dynamically modify a photographing parameter of the camera assembly 1506 according to the ambient light intensity acquired by the optical sensor 1513.

The proximity sensor 1514, also referred to as a distance sensor, is generally arranged on the front of the computer device 1500. The proximity sensor 1514 is configured to acquire a distance between the user and the front of the computer device 1500. In an embodiment, when the proximity sensor 1514 detects that a distance between a surrounding object and the front of the computer device 1500 gradually becomes smaller, the processor 1501 controls the external display screen to display an eye image of the user. When the proximity sensor 1514 detects that a distance between the user and the front of the computer device 1500 gradually becomes larger, the processor 1501 controls the internal display screen to switch from the screen-on state to the screenoff state.

A person skilled in the art may understand that the structure shown in FIG. 15 constitutes no limitation on the computer device 1500, and the terminal may include more or fewer assemblies than those shown in the figure, or some assemblies may be combined, or a different assembly deployment may be used.

The embodiments of the present disclosure further provide a computer device. The computer device includes a processor and a memory, where the memory stores at least one program, and the at least one program is loaded and executed by the processor to implement the method for marking a virtual map according to the foregoing embodiments of the present disclosure.

The embodiments of the present disclosure further provide a computer-readable storage medium, where the computer-readable storage medium is configured to store a computer program, and the computer program is configured to be executed by a computer device to implement the foregoing method for marking a virtual map.

In all embodiments of the present disclosure, the computer-readable storage medium may include: a read-only memory (ROM), a random-access memory (RAM), a solid-state drive (SSD), an optical disc, or the like. The random-access memory may include a resistance random access memory (ReRAM) and a dynamic random-access memory (DRAM). The present disclosure provides a computer-readable storage medium. The storage medium stores at least one program, and the at least one instruction, the at least one program, and the code set or the instruction set are loaded and executed by the processor to implement the method for marking a virtual map provided in the foregoing method embodiments.

The present disclosure further provides a computer program product or a computer program. The computer program product or the computer program includes at least one program, and the at least one program is stored in the computer-readable storage medium. The processor of the computer device reads the computer-readable instruction from the computer-readable storage medium, and the processor executes the computer-readable instructions, so that the computer device performs the method for marking a virtual map provided in the foregoing method embodiments.

The sequence numbers of the foregoing embodiments of the present disclosure are merely for description purpose but do not imply the preference among the embodiments.

A person of ordinary skill in the art may understand that all or some of the steps of the foregoing embodiments may be implemented by hardware or may be implemented by a program instructing relevant hardware. The program may be stored in a computer-readable storage medium. The storage medium may be a read-only memory, a magnetic disk, an optical disc, or the like.

## Claims

1. A method for marking a virtual map, executable by a terminal, wherein the method comprises:
displaying a virtual map of a virtual scenario;
generating a first region identifier that marks a first region of the virtual map, in response to receiving an operation that is performed on the virtual map and indicates the first region; and
displaying the generated first region identifier on the virtual map.

2. The method according to claim 1, wherein generating the first region identifier in response to receiving the operation that is performed on the virtual map and indicates the first region comprises:
generating the first region identifier in response to receiving an operation that triggers a first point on the virtual map, wherein the first region identifier is adjustable during the operation that triggers the first point, and a position of the first point is marked on the first region identifier.

3. The method according to claim 2, wherein generating the first region identifier in response to receiving the operation for triggering the first point on the virtual map comprises:
changing an area of a region marked by the first region identifier during a period in which the operation for triggering the first point is performed continuously, wherein the region when the operation for triggering the first point terminates serves as the first region.

4. The method according to claim 3, wherein changing the area of the region marked by the first region identifier during the period in which the operation for triggering the first point is performed continuously comprises:
changing the area of the region marked by the first region identifier cyclically during the period in which the operation for triggering the first point is performed continuously.

5. The method according to claim 4, wherein the region marked by the first region identifier is a circular region centered at the first point, and changing the area of the region marked by the first region identifier cyclically during the period in which the operation for triggering the first point is performed continuously comprises:
changing a radius of the circular region cyclically during the period in which the operation for triggering the first point is performed continuously.

6. The method according to any one of claims 3 to 5, wherein changing the area of the region marked by the first region identifier during the period in which the operation for triggering the first point is performed continuously comprises:
in response to the operation for triggering the first point being a press at the first point, changing the area of the region marked by the first region identifier when a pressing force at the first point changes.

7. The method according to any one of claims 2 to 5, wherein generating the first region identifier in response to receiving the operation for triggering the first point on the virtual map comprises:
in response to the operation for triggering the first point being a slide passing the first point, determining a trajectory of the slide to serve as at least a part of a contour of the first region identifier.

8. The method according to any one of claims 1 to 7, further comprising:
generating a second region identifier that marks a second region of the virtual map, in response to receiving an operation, which is performed on the virtual map and indicates the second region, and a body of the terminal being tilted, and a contour of the second region protrudes towards a tilting direction of the body; and
displaying the generated second region identifier on the virtual map.

9. The method according to claim 8, wherein generating the second region identifier in response to receiving the operation, which is performed on the virtual map and indicates the second region, and the body of the terminal being tilted comprises at least one of:
expanding a region marked by the second region identifier leftwards, in response to receiving the operation indicating the second region and receiving a first tilting operation, wherein the first tilting operation lifts a right side of the body of terminal with respect to a left side of the body of the terminal;
expanding a region marked by the second region identifier rightwards, in response to receiving the operation indicating the second region and receiving a second tilting operation, wherein the second tilting operation lifts the left side of the body of terminal with respect to the right side of the body of the terminal;
expanding a region marked by the second region identifier downwards, in response to receiving the operation indicating the second region and receiving a third tilting operation, wherein the third tilting operation lifts a front side of the body of terminal with respect to a back side of the body of the terminal; or
expanding a region marked by the second region identifier upwards, in response to receiving the operation indicating the second region and receiving a fourth tilting operation, wherein the fourth tilting operation lifts the back side of the body of terminal with respect to the front side of the body of the terminal.

10. The method according to any one of claims 1 to 9, further comprising:
hiding or removing the first region identifier and generating a third region identifier that marks a third region, of the virtual map, different from the first region, in response to receiving an operation that is performed on the virtual map and indicates the third region.

11. The method according to any one of claims 1 to 10, further comprising:
highlighting a position of a virtual trigger within the first region marked by the first region identifier, wherein the virtual trigger is operable by a virtual object in the virtual scenario, and the virtual object is a movable object in the virtual scenario.

12. An apparatus for marking a virtual map, comprising:
a displaying module, configured for displaying a virtual map, of a virtual scenario;
a generating module, configured for generating a first region identifier that marks a first region of the virtual map, in response to receiving an operation that is performed on the virtual map and indicates the first region; and
wherein the displaying module is configured for displaying the generated first region identifier on the virtual map.

13. A computer device, comprising a processor and a memory, wherein the memory stores at least one program, and the at least one program when loaded and executed by the processor implements the method according to any one of claims 1 to 11.

14. A computer-readable storage medium, storing at least one program, wherein the at least one program when loaded and executed by a processor implements the method according to any one of claims 1 to 11.

15. A computer program product, comprising at least one program, wherein the at least one program when executed by a processor implements the method according to any one of claims 1 to 11.
